Europäisches Patentamt

European Patent Office

Office européen des brevets

(19)

(11) Publication number: **0 194 825**
**A2**

(12)

# EUROPEAN PATENT APPLICATION

(21) Application number: **86301663.0**

(22) Date of filing: **07.03.86**

(51) Int. Cl.⁴: **H 01 R 13/639**

(30) Priority: **09.03.85 GB 8506148**

(43) Date of publication of application:
**17.09.86 Bulletin 86/38**

(84) Designated Contracting States:
**AT BE CH DE FR GB IT LI LU NL SE**

(71) Applicant: **LAP-TAB LIMITED**
**215 Tyburn Road**
**Birmingham B24 8NB West Midlands(GB)**

(72) Inventor: **Murphy, Roger John**
**Box Tree Cottage School Lane**
**Snitterfield Stratford-upon-Avon(GB)**

(72) Inventor: **Stinchcombe, Martin R.**
**2 Castlehills Drive Castle Bromwich**
**Birmingham B36 9BP West Midlands(GB)**

(72) Inventor: **Jefferies, Roy S.**
**Wilcot Cottage 64 Lurley Brook**
**Bridgnorth Salop WV16 4TA(GB)**

(74) Representative: **Lally, William et al,**
**FORRESTER & BOEHMERT Widenmayerstrasse 4/I**
**D-8000 München 22(DE)**

(54) Improvements relating to plug and socket connectors.

(57) An electrical appliance (10, 10', 10a) has a lead (12, 12', 13) which passes through an aperture (40, 40', 25) in a retaining member (35, 35', 18) to a plug (11, 11', 15) in a socket. The retaining member is releasably locked to a housing of the socket by locking means including a locking mechanism (41, 41', 24a).

FIG 1

EP 0 194 825 A2

Title: "Improvements relating to plug and socket connectors"

This invention relates to a plug and socket connector of the kind in which the plug has an electrical lead extending therefrom to an electrically operated appliance, and the plug and socket when engaged, form an electrical connection therebetween.

One such connector is used to connect a plug on the end of a lead of a telephone to a socket outlet. Because the connection is simple and fast to disconnect, this has led to a number of thefts of telephones. Accordingly, a locking means is required to prevent the plug being disengaged from the socket and the telephone being removed by unauthorised persons. However, the invention is applicable to any plug and socket connector such as a standard 13 amp plug and electrical mains power socket outlet, where it is desired to prevent removal of the plug from a socket.

According to a first aspect of the present invention, there is provided a combination comprising an electrically operated appliance, a plug and socket connector and a lead connecting the appliance with the plug or the socket, wherein the connector includes a retaining member and a locking means for releasably locking the retaining member in a position in which it retains the plug of the connector in the socket of the connector.

The appliance may comprise a telephone, having a body, the lead extending from the body and terminating in the plug.

Thus, in the case of a telephone plug and socket connector, it would be necessary to cut the telephone lead in order to remove the telephone. As telephone plugs are usually moulded to their leads it would not be very easy to fit a new plug to reconnect the telephone for use in another location, at least with another socket outlet, and thus the locking means would provide at least a deterrent to a thief.

Where the locking means is used, for example with a 13 amp electrical mains power outlet, the socket is preferably unswitched so that the lead would always be live. This would deter a thief from cutting the lead to any appliance to which the lead carries current from the socket, as the thief would risk receiving an electric shock.

According to a second aspect of the invention, there is provided a plug and socket connector for a combination according to the first aspect of the invention, which includes a locking means for releasably locking the plug of the connector in the socket and/or for releasably locking the plug of the connector out of the socket.

A connector in accordance with the second aspect of the invention and the connector of a combination according to the first aspect of the invention may be achieved by modification of an existing plug and socket connector. Thus, according to a third aspect of the invention, there is provided a locking means for a plug and socket connector of the kind in which the plug has an electrical lead extending therefrom to an electrically operated appliance, the plug and socket when engaged forming an electrical connection therebetween characterised in that the locking means comprises a first member engageable with the socket or mountable adjacent the socket, and a second retaining member engageable with the first member in a retaining position with the plug engaged with the socket, to prevent the plug being disengaged from the socket, and a locking mechanism to prevent the first and second members being disengaged from their relative retaining positions.

The invention will now be described with reference to the accompanying drawings, wherein:-

FIGURE 1 is an exploded perspective view of a first embodiment of a locking means embodying the invention in an inoperative condition and a plug and socket connector with which the locking means is to be used;

FIGURE 2 is a front view of the locking means and plug and socket assembly of Figure 1, in a retained condition;

FIGURE 3 is an exploded perspective view of a second embodiment of a locking means embodying the invention, and a socket with which the locking means may be used;

FIGURE 4 is a front view of the locking means and socket of figure 3 shown assembled and in a retaining position with a plug received and located in the socket; and

FIGURE 5 is a view similar to Figure 1 but showing a still further embodiment.

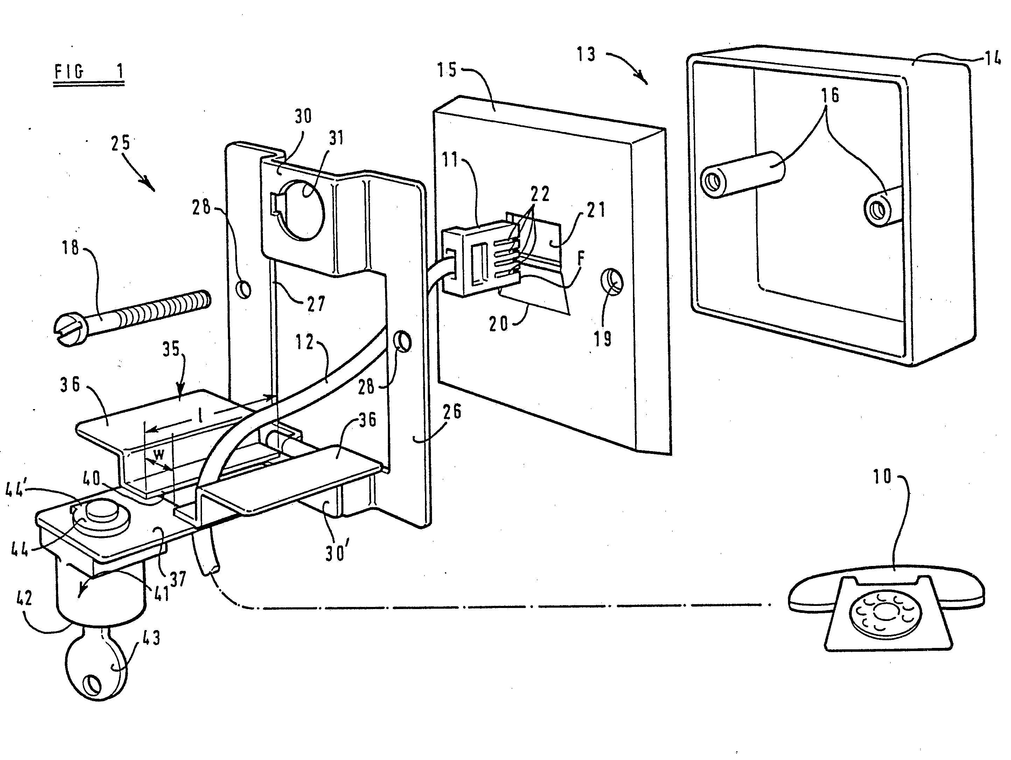

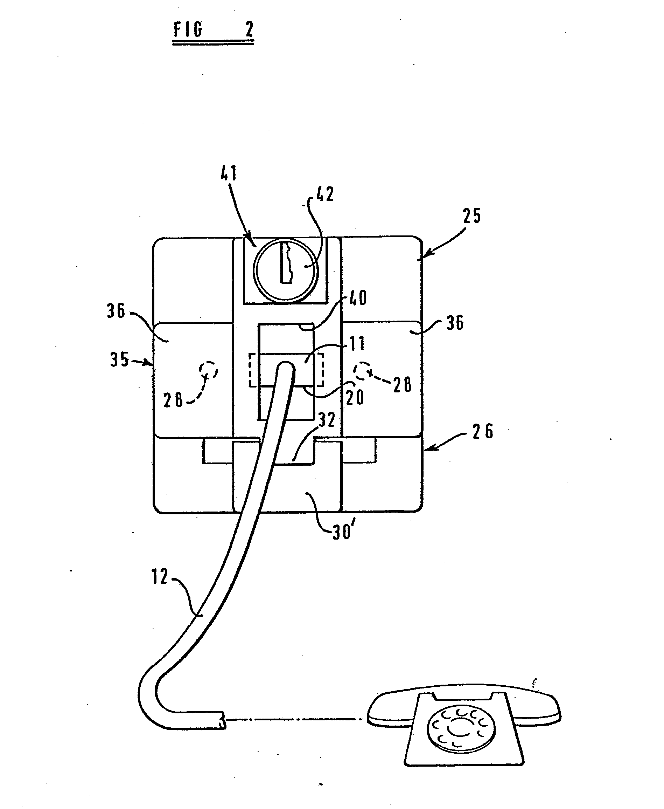

Referring first to figures 1 and 2 of the drawings, a plug and socket connector for a telephone 10 comprises a plug 11 which is moulded to and hence permanently connected to a lead 12 of the telephone, and a socket 13 comprising a housing having a base 14 which is secured by screws or other fastenings to a wall or other mounting surface, such as a skirting board, and a front plate 15 which with the base 14 provides a generally box-like hollow housing. The base 14 has internally thereof a pair of turrets 16 moulded integrally therewith, which receive screws 18, only one of which is shown in figure 1, which pass through openings 19 in the front plate 15. In the present example, the socket 13 is a 67mm square standard telephone socket, the front plate 15 having a socket opening 20 with a resiliently biased flap 21 which automatically closes the opening 20 when the plug 11 is not engaged therein.

The invention is of course equally applicable to other sizes and types of plug and socket assemblies, examples of which are given below.

The plug 11 presents a generally rectangular front face F, the longest side of which as drawn in figure 1, is perpendicular to the direction the plug 11 would need to adopt to be inserted in opening 20. The plug 11 has a plurality of electrical terminals 22 which make electrical connection with corresponding terminals (not shown) inside the socket opening 20.

A locking means 25 is provided to prevent the plug 11 being removed from engagement with the socket 13 by an unauthorised person. The locking means 25 comprises a first plate-like member 26 which has an aperture 27, and a pair of holes 28 which are spaced apart the same distance as openings 19 in the front plate 15. Thus the member 26 can be secured to the front plate 15 by passing the screws 18 through holes 28 before passing them through openings 19 of the front plate 15 into the turrets 16 of the base 14. Upon tightening of the screws 18, the first member 26 of the locking means 25, the front plate 15 and base 14 will thus provide a rigid unitary structure.

The plate-like member 26 has a first raised part 30 with a key-hole shaped cut-out 31, the purpose of which will become apparent hereinafter, and a second raised part 30' which provides a mounting for a hinge 32.

Hinged to the first member 26, by the hinge 32, is a second plate-like member 35 which has two opposite side parts 36 and a middle part 37, the middle part having an opening 40 and a barrel lock 41 secured thereto.

The opening 40 is rectangular, its width $\underline{w}$ and length $\underline{l}$ permitting the plug 11 to be passed therethrough when in a first orientation, i.e. the orientation shown in figure 1, but as will be described hereinafter with reference to Figure 2, prevents the plug 11 being removed from the socket 13 when engaged with the socket in another orientation.

The lock 41 includes a key-receiving barrel 42 in which a key 43 is shown, and a catch 44 which is rotatable by the key 43 and of corresponding configuration to the key-hole shaped cut out 31 in the first member 26.

Thus the second member 35 can be hinged between an inoperative position as shown in Figure 1, to an operative retaining position shown in Figure 2, when the catch 44 will be received by the key-hole shaped cut out 31 in the first raised part 30 of the first member 26. Thereafter, by rotating the key 43, a retainer 44' of the catch 44 will engage behind the periphery of the key-hole shaped cut-out 31 to prevent the second member 35 hinging away from the first member 26.

Referring now particularly to Figure 2, the locking means 25 is shown in an operative position with the second member 35 locked to the first member 26 by the lock 41, and the key 43 has been removed from the barrel 42.

It can be seen that the edges of opening 40 in the second member overlie the plug 11 as the longest side of the rectangular shape thereof is perpendicular to the length of the opening 40 and thus the plug 11 is prevented from being withdrawn from its socket opening 20, whilst the lead 12 extends from the plug 11 through the opening 40.

The side parts 36 of the second member 35 overlie the holes 28 in the first member and thus prevent access being gained to the screws 18 and hence prevent the locking means 25 being removed from the socket 13 as a whole.

It will be appreciated, that the locking means 25 may be used to prevent access being gained to the socket 13. In this event, the second member 35 would be engaged with the first member 26 in a retaining position as shown in Figure 2, but without a plug 11 received in the socket 20. Thus it would be impossible to insert the plug 11 into the socket 20 without having a key 43 to unlock the barrel lock 42 and hence disengage the first and second members 26, 35 from their relative retaining position.

It will be appreciated that many modifications are possible to the locking means 25 described without departing from the scope of the invention.

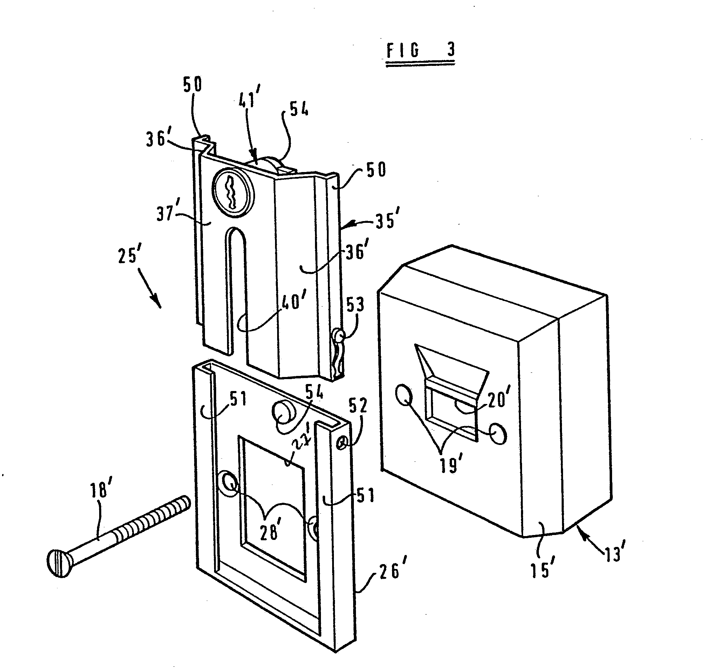

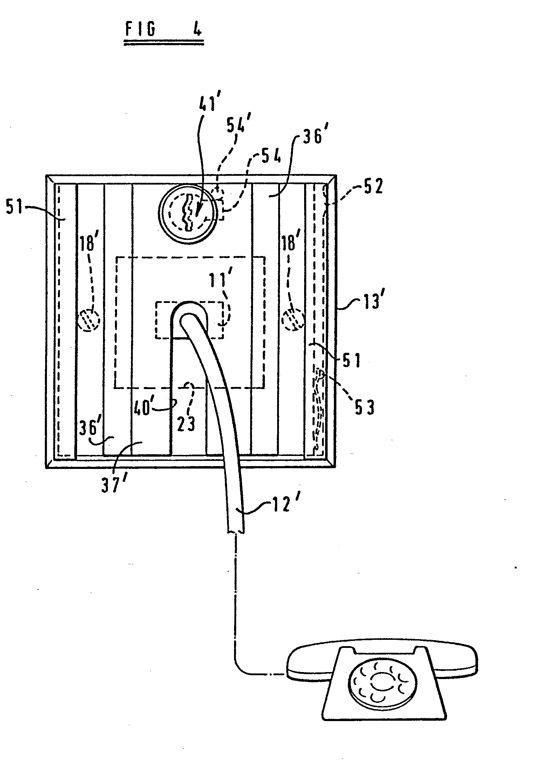

For example, instead of the second member 35 being permanently connected to the first member 26 by a hinge 32 and hence being hinged from an inoperative to an operative retaining position, if desired the two members 26, 35 may be relatively slidable, whereby a second member may be slid into engagement with guide means of the first member and thereafter locked into an operative condition, or any other means of engaging and locking a second member in an operative position in engagement with the first member may be used. Such an arrangement is shown and described with reference to figures 3 and 4 hereinafter.

Instead of passing the plug 11 and lead 12 through an opening in the second member 35, the second member 35 and/or the first member 26 may have an aperture such as a slot which permits the lead 12 to extend from the locking means.

If desired, the side parts 36 of the second member 35 could be of other configurations and could for example conceal a greater or lesser proportion of the front plate 15 of the socket 13, although preferably the side parts 36 would overlie the heads of the screws 18 in the holes 28 so as to prevent their unauthorised removal. The screws 18 preferably have conventional heads and the holes 28 are preferably countersunk, so that the tops of the heads lie flush with the plate 26.

In another embodiment, in place of a barrel lock 41, an electronic or combination or other type of locking mechanism may be used. In this event, the lock need not have a catch such as shown at 44, which is rotatable to engage the periphery of a correspondingly shaped cut-out 31 in member 26.

In another example, the first member 26 merely provides a U-shaped stirrup which passes through an opening in the second member 35 through which a padlock can pass to lock the two members together.

In place of the first member 26 being secured to the front plate 15 of the socket 13 by the screws 18, the first member 26 may be secured by any other means to the socket. In an alternative arrangement, the first part 26 may be mounted adjacent the socket, for example attached to a mounting surface surrounding the socket by fastenings, and the second member may be engageable with or co-operate with the first member to again overlie the plug 11 and prevent its withdrawal from the socket 13 when the first and second members are locked together in their retaining positions.

The second member may in this embodiment comprise a shroud to completely or substantially completely cover the socket 13, or may comprise a locking bar or the like which extends across the plug to prevent the plug being withdrawn from its socket.

Referring now to figures 3 and 4, an alternative locking means 25' is shown, corresponding parts to the locking means 25 of figures 1 and 2 being indicated by the same reference numerals, but with a prime sign added.

The locking means 25' is arranged to prevent the withdrawal of the plug 12' (not shown in figure 3) from a socket 13' which is again a standard telephone socket similar to socket 13 of figures 1 and 2.

The locking means 25' comprises a first plate-like member 26' and a second plate-like member 35'.

The first member 26' is like member 26 of figures 1 and 2, engageable with the socket 13' by screws 18' passing through countersunk holes 28' into openings 19' of the front plate 15' of the socket 13 so that a rigid unitary structure is achieved, although the first member 26' could be engaged with the socket 13 by any other means as required.

The second member 35' has side parts 36' and a middle part 37', the middle part 37' having an aperture comprising a slot 40' which co-operates with an aperture 27' of the first member 26' to trap the lead 12' as seen in figure 4.

The second member 35' has at each free edge of of the side part 36' a first co-operating formation 50 which is received by a corresponding channel guide means 51 at each (vertical as seen in figures 3 and 4) edge of the first member 26'. Thus the second member 35' may be slid relative to the first member 26' from an inoperative position in which the plug 11' may be passed through aperture 27' in first member 26', into engagement with opening 20' of the socket 13', to a retaining position shown in figure 4.

It can be seen that the first member 26' has an aperture 52 in one of the guide means 51, adjacent the upper end thereof, and that the second member 35' carries a spring biased lug 53 adjacent a lower end thereof. As the second member 35' is slid upwardly to permit the plug 11' to be moved from the socket 13', the lug 53 will spring into the aperture 52 to retain the second member 35' to inhibit removal and hence prevent loss of the second member 35'.

Before sliding the second member 35' down to the retaining position, it is necessary to disengage lug 53 from the aperture 52 by depressing lug 53 against the force of its spring.

Middle part 37' of the second member 35' carries a barrel lock 41' similar to the lock 41 of figures 1 and 2, a catch 54 thereof, when the second member 35' is in a retaining position, being engageable under a projection 54' provided on the first member 26', as shown in figure 4, upon operation of the lock with a suitable key (not shown).

When the second member 35' is in a retaining position, the screws 18' are concealed and so the locking means 25' cannot be removed from engagement with the socket 13'.

Various modifications may be made to the embodiments shown in figures 3 and 4 without departing from the scope of the invention. For example, the first and second members need not be of the exact configuration shown, but the first and second members may be of alternative configurations. For example, the second member 35' may be provided with a channel guide means to receive a flange or the like provided on the first member 26'.

Instead of the second member 35' being slid downwardly from an inoperative to an operative position, if desired an arrangement may be provided in which the second member 35' slides laterally relative to the first member 26' from the inoperative to the operative position.

Again, instead of the barrel lock 41' a combination lock or another type of lock altogether may be provided.

Although as described, with reference to the drawings, the invention has been applied to a 67mm square telephone socket, the invention could of course be applied to other sizes of telephone socket and to other types of plug and socket assembly altogether, e.g. a 50mm square socket. In each case, the second member of the locking means need not overlie the plug as described, but could for example engage a part provided on the plug for example an outwardly extending lip, to prevent its withdrawal from the socket.

The invention could be applied to a conventional 13 amp mains power socket outlet where it is desired to prevent withdrawal of a plug from its socket. In this event, preferably the socket would be unswitched so that the lead to the plug would remain permanently live and hence deter anyone from cutting through the lead in order to interfere with the appliance to which the lead is carrying current.

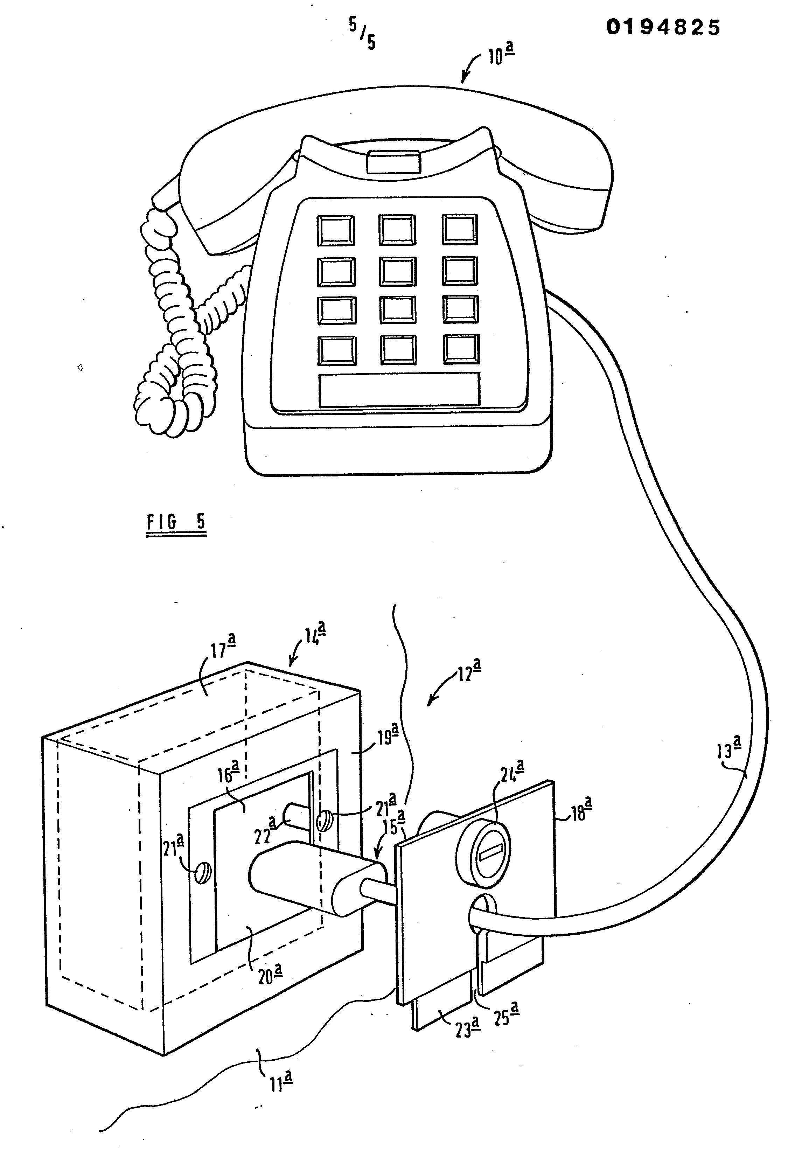

Referring now to Figure 5, this illustrates an electrically operated appliance 10a (a telephone in the particular example illustrated) connected with fixed wiring (not shown) installed on or in a wall 11a by means of an electrical plug and socket connector 12a and a flexible lead 13a. A first member comprising a housing 14a shrouding the socket 16a and is mounted in a fixed position on the wall 11a, one end portion of the lead 13a is anchored in a plug 15a of the connector and the other end portion of the lead is anchored in the telephone 10a.

- 8 -

0194825

A locking means is provided for locking the plug 15a in the socket 16a shrouded by the housing 14a. The locking means can alternatively be used to lock the plug 15a out of the socket.

The socket shrouded by the housing 14a is a known component of telephone installations and which is normally secured on a wall or other supporting structure by a pair of fixing screws arranged with their centres 50mm apart. The socket 16a receives the plug 15a and is provided with a plurality of electrical contacts for co-operation with corresponding contacts of the plug. Typically, the socket 16a is also provided with a shutter which slides upwardly and downwardly to close the socket when the plug is absent therefrom.

The housing 14a comprises a hollow body 17a with which a plate-like second, retaining member, can be engaged 18a. The body has the form of a box which is open at least at the rear and which may also be open at the bottom. The body includes a front wall 19a defining a window through which access can be gained to the socket 16a and to the shutter. A pair of through bores at 50mm centres are formed in the front wall 19a to receive fixing screws 21a. The front wall is spaced a substantial distance, for example at least 8mm, from the front of the socket 16a and a pair of spacers 22a are provided on or adjacent to the rear face of the front wall 19a to space that front wall from the socket.

The front wall 19 defines at its front face a recess to receive the retaining member 18a and thereby determine the position of the retaining member, when applied to the body 17a. Along its lower edge, the retaining member is provided with a lip 23a for engaging the rear face of the front wall 19a adjacent to a lower boundary of the window, and near to an opposite upper edge of the retaining member, there is formed an aperture in which there is mounted a locking mechanism 24a.

The locking mechanism has an eccentric element (not shown) which can be turned about a longitudinal axis of the lock with a key-receiving member, when the proper key is present therein, between a locking position and a releasing position. In the locking position, the eccentric element projects upwardly from the retainer 18a to engage the rear face of the front wall 19a above the window therein. In the releasing position, the eccentric element does not project upwardly from the retainer. The arrangement may be such that the key can be withdrawn from the locking mechanism only when the eccentric element is in its locking position. The locking mechanism may incorporate tumblers which are engaged by the key and displaced to respective releasing positions. Alternatively, the locking mechanism may incorporate locking elements which are moved by magnetic or electrical a field associated with the key, without direct contact between the locking elements and the key occurring. Additionally or alternatively, the locking mechanism may incorporate means for reading information from a key and providing an electrical signal representing that information. In this case, the lock mechanism would be provided with a processor for processing the electrical signal and provide an output signal for controlling unlocking.

There is formed in the retaining member 18a an aperture 25a in the form of a slot having an open-end at the free edge of the lip 23a and a closed end near the centre of the retaining member. The slot extends a part of the way from the lip 23a to the locking mechanism 24a. The width of the slot may be substantially uniform throughout its length. Alternatively, as shown, the slot may incorporate a somewhat wider portion adjacent to its closed end. Throughout its length, the slot is sufficiently wide for lead 13a to pass along the slot. In a case where the lead is substantially circular, the width of the slot is at least slightly greater than the diameter of lead. In a case where the lead has a non-circular cross-section, the width of the slot is at least slightly greater than the minimum cross-sectional dimension of the lead. The size of the slot 25a is such that the plug 15a cannot pass through the slot. In a case where the plug has a somewhat elongated transverse cross-section, the smaller transverse dimension of the plug may be less than the width of the slot, if the proximity of the retaining member 18a to the inner housing 16a is such that the plug cannot pass completely through the slot 25a before entering the socket of the inner housing. Preferably, each dimension of the plug exceeds the width of the slot.

An installation which includes an existing socket outlet comprising a base and a cover can be modified in accordance with the present invention. In a case where the socket outlet comprises a base fixed to a wall and a cover releasably mounted on the base by means of screws, the screws securing the cover to the base would be removed. It is unnecessary for the cover to be removed from the base, however. The body 17a would then be applied over the existing socket outlet 16a, and a pair of longer fixing screws would then be passed through the front wall 19a and through the cover of the socket 16a into the base of that cover to secure the body 17a of the outer housing and the cover of the inner housing together to the base. The socket 16a is then disposed inside the body 17a. During this stage of the modification, the retaining member 18a is separated from the body 17a and the plug 15a on the end of the lead of the telephone 10a is absent from the socket.

The lead 13a is passed into the slot 25a through the open end thereof, as shown in the drawing. The plug is then inserted through the window into the socket to connect the telephone with the fixed wiring. When fully inserted in the socket, the plug lies entirely within the body 17a and protrudes from the inner housing 16a a distance which is less than the spacing of the front wall 19a from that inner housing. The retaining member 18a is then moved along the lead, the lip 23a is introduced into the body 17a and the retaining member is positioned in the recess defined by the body 17a, so as to cover the fixing screws and to close the window defined by the front wall 19a. The key is then used to turn the key-receiving member of the locking mechanism 24a and lock the retaining to the body 17a, before the key is withdrawn. Removal of the plug from the socket is then prevented, until such time as the retaining member is unlocked and removed from the body 17a.

It will be noted that, if the retaining member 18a is locked to the body 17a whilst the plug 15a is absent from the socket, the plug cannot subsequently be inserted in the socket, unless the retainer is first removed from the body.

The body 17a may be formed as a pressing from sheet metal or as a moulding of a plastics material. The retaining member 18a and locking mechanism 24a may be incorporated during initial manufacture into the connector 12a, in which case the housing 14a which is adapted to receive the retainer 18a may also provide the socket. A retaining member of an alternative shape may be provided, which may be movable with the key-receiving member of the locking mechanism and be arranged itself to obstruct movement of the plug into and out of the socket.

In the particular example illustrated, the lead 13a transmits to the telephone 10a electrical power for operating the telephone, for example energising a sound-emitting device of the telephone, and also transmits electrical signals between the telephone and the fixed wiring. The lead 13a and connector 12a may alternatively be used for transmitting other kinds of signal, for example optical signals or pneumatic signals.

The features disclosed in the foregoing description, or the following claims, or the accompanying drawings, expressed in their specific forms or in terms of a means for performing the disclosed function, or a method or process for attaining the disclosed result, may, separately or any combination of such features, be utilised for realising the invention in diverse forms thereof.

- 12 -

**0194825**

CLAIMS:

1. A combination comprising an electrically operated appliance (10; 10';10a), a plug (11; 11'; 15a) and socket (13; 13') connector and a lead (12; 12'; 13a) connecting the appliance with the plug or the socket (13; 13') characterised in that the connector includes a retaining member (35; 35', 35a) and a locking means (41; 41'; 24) for releasably locking the retaining member (35; 35'; 18a) in a position in which it retains the plug of the connector in the socket (13; 13') of the connector.

2. A combination according to Claim 1 characterised in that the electrical appliance comprises a telephone, having a body, the lead extending from the body and terminating in the plug (11; 11'; 15a).

3. A plug and socket connector for a combination according to Claim 1 or Claim 2 which includes a locking means (41; 41'; 24) for releasably locking the plug (11; 11'; 15a) in the socket and/or for releasably locking the plug out of the socket.

4. A locking means for a plug and socket connector of the kind in which the plug (11; 11'; 15a) has an electrical lead extending therefrom to an electrically operated appliance (10; 10'; 10a), the plug and socket when engaged forming an electrical connection therebetween characterised in that the locking means comprises a first member (26; 26'; 14a) engageable with the socket or mountable adjacent the socket, and a second, retaining, member (35; 35';18a) engageable with the first member in a retaining position with the plug (11; 11'; 15a) engaged with the socket, to prevent the plug being disengaged from the socket, and a locking mechanism (41; 41'; 24a) to prevent the first and second members being disengaged from their relative retaining positions.

5. A locking means according to Claim 4 characterised in that the socket comprises a housing having a base (14; 14'; 14a) and a front plate (15; 15';) secured together by fasteners (18; 18'), the first member (26; 26') of the locking means being engageable with the socket with the same fasteners that secure the front plate (15; 15;) to the base (14; 14').

- 13 -

0194825

6. A locking means according to Claim 5 characterised in that the second member (35; 35'; 18a) of the locking means, at least when engaged with the first member (26; 26'; 14a), includes means (36; 36') to prevent access being gained to the fasteners (18; 18') so that the locking means cannot be removed as a whole from engagement with the socket, until the second member is disengaged from its operative position.

7. A locking means according to Claim 5 or Claim 6 characterised in that the first member comprises a hollow body (14a) which is secured to and substantially conceals or shrouds the housing of the socket but permits the plug (15a) to be engaged with the socket.

8. A locking means according to any one of Claims 4 to 6 characterised in that the first member comprises a plate-like member (26) and the second member also comprises a plate-like member (35) hinged to the first member (26), the locking mechanism (41), in use, preventing the second member (35) being hinged from its operative position.

9. A locking means according to any one of Claims 4 to 6 characterised in that the first member comprises a plate-like member (26') and the second member comprises a plate-like member (35'), the second member (35')being slidable into an operative position by means of co-operating guide means (50, 51) provided on the first and second members.

10. A locking means according to any one of Claims 4 to 9 characterised in that the first and/or second member has an aperture (40; 40'; 25) through which the lead (12; 12'; 13a) extends, the aperture being too small for the plug to pass through the aperture.

FIG 1

0194825

FIG 2

FIG 3

0194825

FIG 4

0194825

FIG 5